# EUROPÄISCHE PATENTSCHRIFT

(11) **EP 3 548 743 B1**
(45) Veröffentlichungstag und Bekanntmachung des Hinweises auf die Patenterteilung: **09.09.2020**
(21) Anmeldenummer: 17703048.3
(22) Anmeldetag: 23.01.2017
(51) Int. Cl.: F28D 3/04, F28F 27/00, F03D 80/60, F28D 5/02, F28D 21/00

(54) **KÜHLEINRICHTUNG ZUM KÜHLEN EINER ENERGIETECHNISCHEN OFFSHORE-ANLAGE**
COOLING DEVICE FOR COOLING AN OFFSHORE ENERGY SYSTEM
DISPOSITIF DE REFROIDISSEMENT SERVANT AU REFROIDISSEMENT D'UNE INSTALLATION ÉLECTROTECHNIQUE EN MER

(43) Veröffentlichungstag der Anmeldung: 09.10.2019
(73) Patentinhaber: Siemens Aktiengesellschaft, 80333 München (DE)
(72) Erfinder: PAPADOPOULOS, Theodoros, 80333 München (DE); BOSCHERT, Stefan, 85579 Neubiberg (DE); HACKER, Felix, 90419 Nürnberg (DE); HAMMER, Thomas, 91126 Schwabach (DE); HEINRICH, Christoph, 86609 Donauwörth (DE); METH, Jochen, 91448 Emskirchen (DE)
(86) Internationale Anmeldenummer: PCT/EP2017/051308
(87) Internationale Veröffentlichungsnummer: WO 2018/133950

(56) Entgegenhaltungen:
- EP-A1- 2 578 879
- WO-A1-2013/185767
- US-A1- 2010 242 534
- US-A1- 2012 269 625
- US-A1- 2014 231 042

## Beschreibung

In den letzten Jahren werden energietechnische Anlagen, wie zum Beispiel Windkraftwerke, in zunehmendem Maße offshore, das heißt in der offenen See errichtet. Die dort gewonnene elektrische Energie wird in der Regel auf eigens dafür vorgesehenen Offshore-Plattformen gesammelt, mittels Transformatoren und Gleichrichtern auf hohe Gleichspannungen transformiert und in dieser Form verlustarm per Kabel zum Festland übertragen.

Aufgrund des hohen Energieumsatzes führen indes auch relativ geringfügige Energie- oder Umwandlungsverluste zu einer starken Wärmeentwicklung, die geeignete Kühlungsmaßnahmen vor Ort erfordern. Häufig werden hierfür windgekühlte Radiatoren als Wärmetauscher eingesetzt. Die Kühlleistung hängt dabei offensichtlich stark von den vorherrschenden Windverhältnissen und von der Lufttemperatur ab. Obschon im Offshore-Bereich meist ausreichende Windstärken vorherrschen, so ist dennoch dafür zu sorgen, dass auch an heißen und/oder windstillen Tagen eine ausreichende Wärmeabfuhr sichergestellt ist. Aus diesem Grunde werden windgekühlte Radiatoren häufig überdimensioniert und/oder mit Ventilatoren versehen, die eine ausreichende Luftströmung sicherstellen. Dies erhöht jedoch in der Regel einen Installations- und/oder Wartungsaufwand beträchtlich. Das Dokument US2012/0269625 offenbart ein Kühlsystem für eine Windkraftanlage, die Wasser als Kühlmedium verwendet.

Es ist Aufgabe der vorliegenden Erfindung, eine Kühleinrichtung sowie eine damit ausgerüstete Offshore-Plattform anzugeben, die eine effizientere Kühlung einer energietechnischen Offshore-Anlage erlauben.

Gelöst wird diese Aufgabe durch eine Kühleinrichtung mit den Merkmalen des Patentanspruchs 1 sowie durch eine Offshore-Plattform mit den Merkmalen des Patentanspruchs 9. Erfindungsgemäß ist eine Kühleinrichtung zum Kühlen einer energietechnischen Offshore-Anlage vorgesehen, die einen Wassertank sowie eine in den Wassertank mündende Auffangeinrichtung zum Sammeln von Regenwasser im Wassertank aufweist. Die energietechnische Offshore-Anlage kann dabei insbesondere einen Offshore-Transformator und/oder einen Offshore-Stromrichter umfassen. Die Kühleinrichtung verfügt weiterhin über einen mit der energietechnischen Offshore-Anlage thermisch koppelbaren Wärmetauscher, über eine vom Wassertank zum Wärmetauscher führende Wasserleitung zum Zuführen von gesammeltem Regenwasser zum Wärmetauscher zum Kühlen des Wärmetauschers sowie über eine Zulaufsteuerung für die Wasserleitung zum Steuern der Regenwasserzuführung abhängig von einer von einem Temperatursensor gemessenen Temperatur.

Als Wärmetauscher kann insbesondere ein windgekühlter Wärmetauscher vorgesehen sein. Eine Wärmeabfuhr vom Wärmetauscher, z.B. durch Wind, Konvektion und/oder Wärmeabstrahlung kann durch das zugeführte Regenwasser und/oder dessen Verdunstungskälte in der Regel stark erhöht werden. Infolgedessen kann der Wärmetauscher in vielen Fällen erheblich kleiner dimensioniert werden als ein ausschließlich windgekühlter Wärmetauscher. Mittels der temperaturabhängigen Zulaufsteuerung kann die zusätzliche Kühlung des Wärmetauschers durch Regenwasser vorzugsweise auf heiße, windarme oder andere hinsichtlich der Kühlung extreme Situationen beschränkt werden. Insofern derartige Extremsituationen relativ selten auftreten, genügt ein relativ kleiner Wasservorrat, der in der Regel ohne große Schwierigkeit durch Regenwasser gespeist werden kann.

Gemäß einem weiteren Aspekt der Erfindung ist eine Offshore-Plattform mit einer energietechnischen Offshore-Anlage sowie mit einer erfindungsgemäßen Kühleinrichtung zum Kühlen der energietechnischen Offshore-Anlage vorgesehen, wobei eine Regenwasser-Drainage der Offshore-Plattform in den Wassertank mündet.

Durch die Nutzung einer in vielen Fällen ohnehin vorhandenen Regenwasser-Drainage einer Offshore-Plattform zum Speisen des Wassertanks kann die Erfindung auf besonders einfache Weise implementiert werden.

Vorteilhafte Ausführungsformen und Weiterbildungen der Erfindung sind in den abhängigen Ansprüchen angegeben.

Nach einer vorteilhaften Ausführungsform der Erfindung kann der Temperatursensor dazu eingerichtet sein, eine Temperatur der energietechnischen Offshore-Anlage, eine Temperatur des Wärmetauschers, eine Lufttemperatur und/oder eine Wassertemperatur, z.B. von umgebendem Meerwasser oder des gesammelten Regenwassers zu messen. Auf diese Weise kann die Regenwasserzuführung zum Wärmetauscher durch die Zulaufsteuerung derart geregelt werden, dass sie mit einer jeweiligen gemessenen Temperatur ansteigt, um so die Wärmeabfuhr gezielt zu erhöhen und damit die Betriebstemperatur der Offshore-Anlage zu begrenzen.

Weiterhin kann an der Wasserleitung eine von der Zulaufsteuerung gesteuerte Pumpe angeordnet sein zum Befördern des Regenwassers vom Wassertank zum Wärmetauscher abhängig von der gemessenen Temperatur. Die Pumpe kann dabei derart gesteuert werden, dass sie bei Erreichen eines vorgegebenen Temperatur-Schwellwertes eingeschaltet wird und/oder dass eine Pumpleistung kontinuierlich mit der gemessenen Temperatur erhöht wird.

Nach einer vorteilhaften Weiterbildung der Erfindung kann ein Verschmutzungssensor zum Ermitteln einer Verschmutzung des Wärmetauschers vorgesehen sein. Die zu ermittelnde Verschmutzung kann insbesondere eine meerwasserbedingte Salzablagerung sein. Die Zulaufsteuerung kann dann zum Steuern der Regenwasserzuführung abhängig von der ermittelten Verschmutzung eingerichtet sein. Durch die Zuführung von gesammeltem Regenwassers zum Wärmetauscher kann dieser insbesondere von Salzablagerungen gereinigt werden. Auf diese Weise können vorhandene Mittel der erfindungsgemäßen Kühleinrichtung zusätzlich genutzt werden, um eine Korrosion des Wärmetauschers wirksam zu verhindern oder zumindest zu verringern.

Weiterhin kann eine an die Wasserleitung angeschlossene Sprühanlage und/oder Sprinkleranlage zum Versprühen, Spritzen oder Träufeln des zugeführten Regenwassers auf den Wärmetauscher vorgesehen sein. Alternativ oder zusätzlich kann an die Wasserleitung eine Benetzungsanlage angeschlossen sein, um das zugeführte Regenwasser als Wasserfilm auf den Wärmetauscher aufzubringen. Die Sprühanlage, Sprinkleranlage und/oder Benetzungsanlage kann insbesondere über dem Wärmetauscher und/oder in unterschiedlichen Höhen neben dem Wärmetauscher angeordnet sein. Die vorstehenden Einrichtungen zur Benetzung des Wärmetauschers erlauben es in vielen Fällen, herkömmliche windgekühlte Wärmetauscher erfindungsgemäß zu verwenden.

Ein Ausführungsbeispiel der Erfindung wird nachfolgend anhand der Zeichnung näher erläutert. Dabei zeigen jeweils in schematischer Darstellung:
- Figur 1: eine Offshore-Plattform mit einer erfindungsgemäßen Kühleinrichtung für eine energietechnische Offshore-Anlage und
- Figur 2: eine erfindungsgemäße Kühleinrichtung in detaillierterer Darstellung.

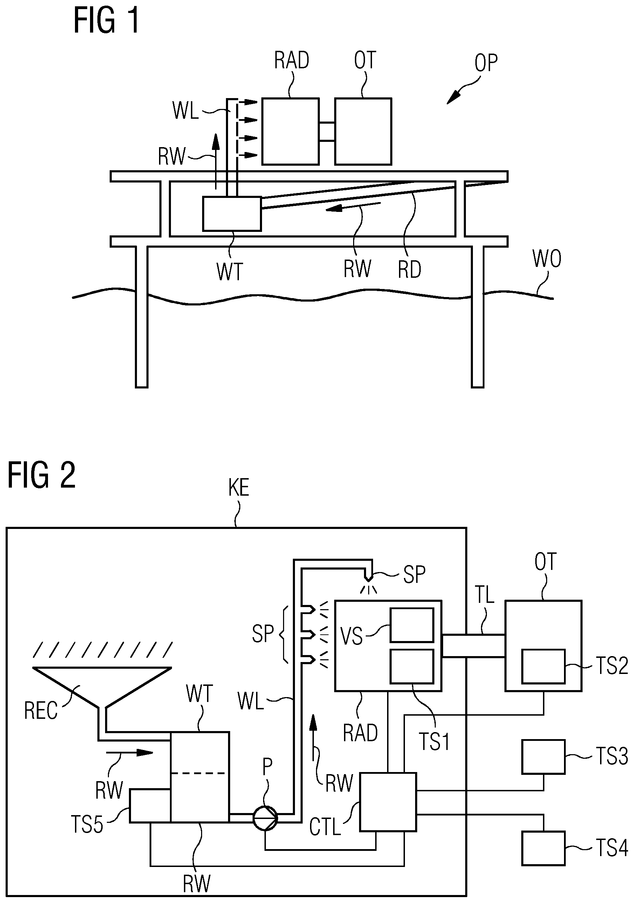

Figur 1 veranschaulicht eine auf offener See zu betreibende Offshore-Plattform OP. Diese trägt als Aufbauten oberhalb einer durch eine Wellenlinie angedeuteten Wasseroberfläche WO eine energietechnische Offshore-Anlage OT, einen mit dieser thermisch gekoppelten Wärmetauscher RAD sowie einen Wassertank WT zum Sammeln von Regenwasser RW. Die Offshore-Anlage OT kann beispielsweise ein Offshore-Transformator zum Transformieren von durch eine Offshore-Windturbine (nicht dargestellt) erzeugter elektrischer Energie, eine andere Energie-übertragungs- oder Energieumwandlungseinrichtung oder eine Energieerzeugungseinrichtung sein.

Der Wärmetauscher RAD, zum Beispiel ein sogenannter Radiator, ist vorzugsweise windgekühlt und weist eine Vielzahl von Kühlflächen mit einer großen vom Wind überstrichenen Oberfläche auf. Der Wärmetauscher RAD entzieht der Offshore-Anlage OT Wärme und gibt diese über seine Kühlflächen ab.

Die Offshore-Plattform OP verfügt weiterhin über eine Regenwasser-Drainage RD, die als Teil einer Auffangeinrichtung für Regenwasser RW genutzt wird und in den Wassertank WT mündet. Auf diese Weise wird zumindest ein Teil des auf die Offshore-Plattform OP fallenden Regens über die Regenwasser-Drainage RD im Wassertank WT gesammelt.

Vom Wassertank WT führt eine Wasserleitung WL zum Wärmetauscher RAD. Über die Wasserleitung WL wird im Wassertank WT gesammeltes Regenwasser RW dem Wärmetauscher RAD zugeführt, um diesen zusätzlich zum Wind zu kühlen. Das Regenwasser RW wird hierzu auf die Kühlflächen des Wärmetauschers RAD - wie in Figur 1 durch kurze Pfeile angedeutet - versprüht, gespritzt, geträufelt oder auf andere Weise aufgebracht. Durch das zugeführte Regenwasser RW und/oder durch dessen Verdunstungskälte kann die Wärmeabfuhr der Kühlflächen gegenüber einer reinen Windkühlung in der Regel stark erhöht werden, wodurch sich die Kühlleistung des Wärmetauschers RAD erheblich steigert. Infolgedessen kann der Wärmetauscher RAD in vielen Fällen erheblich kleiner als ein rein windgekühlter Wärmetauscher dimensioniert werden.

Der Wärmetauscher RAD, der Wassertank WT sowie die Wasserleitung WL sind Teile einer erfindungsgemäßen Kühleinrichtung. Eine solche wird im Folgenden anhand von Figur 2 detaillierter beschrieben.

Figur 2 zeigt in schematischer Darstellung eine offshore zu betreibende, erfindungsgemäße Kühleinrichtung KE zum Kühlen einer energietechnischen Offshore-Anlage OT. Die Offshore-Anlage OT kann zum Beispiel einen Offshore-Transformator und/oder einen Offshore-Stromrichter umfassen.

In Figur 2 werden für entsprechende Entitäten die gleichen Bezugszeichen verwendet wie in Figur 1.

Die Offshore-Anlage OT ist mittels einer Wärmeübertragungsleitung TL thermisch an einen windgekühlten Wärmetauscher RAD der Kühleinrichtung KE gekoppelt. Wie bereits im Zusammenhang mit Figur 1 bemerkt, kann der Wärmetauscher RAD zum Beispiel ein Radiator sein und über eine Vielzahl von Kühlflächen mit einer großen vom Wind überstrichenen Gesamtoberfläche verfügen. Durch die Wärmeübertragungsleitung TL wird Wärme von der Offshore-Anlage OT zum Wärmetauscher RAD transportiert, zum Beispiel durch Wärmeleitung und/oder Austausch von Kühlöl, Kühlwasser oder anderen Kühlmedien.

Bei einem Offshore-Transformator als Offshore-Anlage OT kann über die Wärmeübertragungsleitung TL Transformatorenöl des Offshore-Transformators OT zwischen diesem und dem Wärmetauscher RAD ausgetauscht und durch den Wärmetauscher RAD gekühlt werden. Gerade bei Leistungstransformatoren ist darauf zu achten, dass deren Transformatorenöl eine kritische Temperatur nicht überschreitet. Oberhalb dieser kritischen Temperatur verschlechtern sich Isolationseigenschaften des Transformatorenöls beträchtlich, wodurch ein elektrischer Funkenüberschlag mit hohem Zerstörungspotential im Transformator verursacht werden könnte.

Die Kühleinrichtung KE weist einen Wassertank WT auf, in den eine Auffangeinrichtung REC für Regenwasser RW mündet. Auf diese Weise wird in die Auffangeinrichtung REC fallender Regen in den Wassertank WT geleitet und dort gesammelt. Die Auffangeinrichtung REC kann, wie im Zusammenhang mit Figur 1 bereits erläutert, an eine Regenwasser-Drainage einer Offshore-Plattform angeschlossen sein.

Vom Wassertank WT verläuft eine Wasserleitung WL zum Wärmetauscher RAD. An der Wasserleitung WL ist eine Pumpe P angeordnet, die im Wassertank WT gesammeltes Regenwasser RW über die Wasserleitung WL zum Wärmetauscher RAD pumpt, um diesen zusätzlich zu kühlen. Das Regenwasser RW wird mittels einer an die Wasserleitung WL angeschlossenen Sprühanlage oder Sprinkleranlage SP auf die Kühlflächen des Wärmetauschers RAD gesprüht, gespritzt, geträufelt oder anderweitig, zum Beispiel als Wasserfilm, aufgebracht. Die Sprüh- oder Sprinkleranlage SP umfasst mehrere Sprühdüsen, Spritzdüsen oder andere Benetzungseinrichtungen, die oberhalb sowie in unterschiedlichen Höhen neben dem Wärmetauscher RAD beziehungsweise dessen Kühlflächen angeordnet sind.

Zum Steuern der Regenwasserzuführung ist eine Zulaufsteuerung CTL für die Wasserleitung WL vorgesehen. Die Zulaufsteuerung CTL ist mit der Pumpe P sowie mit dem Wärmetauscher RAD gekoppelt. Durch die Zulaufsteuerung CTL werden die Pumpe P, gegebenenfalls die Sprüh- oder Sprinkleranlage SP sowie eventuell ein oder mehrere an der Wasserleitung WL angeordnete Ventile gesteuert. Die Steuerung erfolgt abhängig von durch Temperatursensoren TS1,...,TS5 gemessenen Temperaturen. Die Temperatursensoren TS1,...,TS5 sind jeweils mit der Zulaufsteuerung CTL gekoppelt und übermitteln aktuell gemessene Temperaturwerte an diese.

Im vorliegenden Ausführungsbeispiel ist der Temperatursensor TS1 im Wärmetauscher RAD angeordnet und dient zur Messung einer oder mehrerer Temperaturen des Wärmetauschers RAD, zum Beispiel einer Temperatur von dessen Kühlflächen und/oder einer Temperatur des mit der Offshore-Anlage OT ausgetauschten Kühlöls oder Kühlwassers. Der Temperatursensor TS2 ist in der Offshore-Anlage OT angeordnet und dient zur Messung einer oder mehrerer Temperaturen der Offshore-Anlage OT, zum Beispiel einer Temperatur des Transformatorenöls. Weiterhin dienen der Temperatursensor TS3 zur Messung einer Temperatur der Umgebungsluft und der Temperatursensor TS4 zur Messung einer Meerestemperatur. Der Temperatursensor TS5 ist im Wassertank WT angeordnet, und dient zur Messung einer Temperatur des gesammelten Regenwassers RW.

Zur Steuerung der Pumpe P verfügt die Zulaufsteuerung CTL über eine temperaturabhängige Regelung, gemäß der die Pumpleistung, das heißt die pro Zeit vom Wassertank WT zum Wärmetauscher RAD beförderte Regenwassermenge mit einer oder mehreren der gemessenen Temperaturen steigt. Hierbei kann ein Temperaturschwellwert vorgegeben sein, bei dessen Erreichen die Pumpe P eingeschaltet wird. Darüber hinaus kann die Pumpleistung kontinuierlich, zum Beispiel linear, mit einer jeweiligen Temperatur gesteigert werden.

Durch die temperaturabhängige Steuerung kann die zusätzliche Kühlung des Wärmetauschers RAD mittels Regenwasser vorzugsweise auf heiße, windarme oder andere hinsichtlich der Kühlung extreme Situationen beschränkt werden. Auf diese Weise wird weniger gesammeltes Regenwasser verbraucht, und der Wassertank WT kann kleiner dimensioniert werden.

Durch das zugeführte Regenwasser RW und insbesondere durch dessen Verdunstungskälte beim Verdunsten auf den Kühlflächen des Wärmetauschers RAD kann die Wärmeabfuhr von den Kühlflächen gegenüber einer reinen Windkühlung in der Regel erheblich verstärkt werden. Infolgedessen kann der Wärmetauscher RAD einer erfindungsgemäßen Kühleinrichtung KE in vielen Fällen kleiner dimensioniert werden. Insbesondere kann in vielen Fällen vermieden werden, dass der Wärmetauscher RAD zur Bewältigung seltener Extremsituationen ausgelegt werden muss, die z.B. an heißen und/oder windarmen Tagen auftreten. Speziell in solchen Extremsituationen erlaubt die temperaturabhängige Zulaufsteuerung eine effiziente zusätzliche Kühlung durch Regenwasser. Insofern derartige Extremsituationen relativ selten auftreten, genügt dabei ein relativ kleiner Wasservorrat, der in der Regel ohne große Schwierigkeit durch Regenwasser gespeist werden kann.

Zusätzlich kann der Wärmetauscher RAD über einen Verschmutzungssensor VS verfügen, der zum Ermitteln einer Verschmutzung des Wärmetauschers RAD, insbesondere durch eine meerwasserbedingte Salzkruste oder andere Salzablagerungen dient. Der Verschmutzungssensor VS ist mit der Zulaufsteuerung CTL gekoppelt. Sobald die Zulaufsteuerung CTL mittels des Verschmutzungssensors VS eine Verschmutzung des Wärmetauschers RAD detektiert, veranlasst die Zulaufsteuerung CTL die Pumpe P dazu, Regenwasser RW aus dem Wassertank WT zum Wärmetauscher RAD zu pumpen, um diesen zu reinigen. Alternativ oder zusätzlich kann eine solche Reinigung in regelmäßigen Zeitabständen durch die Zulaufsteuerung CTL veranlasst werden. Auf diese Weise können vorhandene Mittel der erfindungsgemäßen Kühleinrichtung KE auf vorteilhafte Weise zusätzlich genutzt werden, um den Wärmetauscher RAD von Salzwasser zu reinigen und so dessen Korrosion wirksam zu verhindern oder zumindest zu verringern.

## Patentansprüche

1. Kühleinrichtung (KE) zum Kühlen einer energietechnischen Offshore-Anlage (OT), mit
- einem Wassertank (WT),
- einer in den Wassertank (WT) mündenden Auffangeinrichtung (REC) zum Sammeln von Regenwasser (RW) im Wassertank (WT),
- einem mit der energietechnischen Offshore-Anlage (OT) thermisch koppelbaren Wärmetauscher (RAD),
- einer vom Wassertank (WT) zum Wärmetauscher (RAD) führenden Wasserleitung (WL) zum Zuführen von gesammeltem Regenwasser (RW) zum Wärmetauscher (RAD) zum Kühlen des Wärmetauschers (RAD), und
- einer Zulaufsteuerung (CTL) für die Wasserleitung (WL) zum Steuern der Regenwasserzuführung abhängig von einer von einem Temperatursensor (TS1,...,TS5) gemessenen Temperatur.

2. Kühleinrichtung nach Anspruch 1, **dadurch gekennzeichnet, dass** die energietechnische Offshore-Anlage (OT) einen Offshore-Transformator und/oder einen Offshore-Stromrichter umfasst.

3. Kühleinrichtung nach einem der vorhergehenden Ansprüche,
**dadurch gekennzeichnet,**
**dass** der Temperatursensor (TS1,...,TS5) dazu eingerichtet ist, eine Temperatur der energietechnischen Offshore-Anlage (OT), eine Temperatur des Wärmetauschers (RAD), eine Lufttemperatur und/oder eine Wassertemperatur zu messen.

4. Kühleinrichtung nach einem der vorhergehenden Ansprüche,
**gekennzeichnet durch**
eine an der Wasserleitung (WL) angeordnete und von der Zulaufsteuerung (CTL) gesteuerte Pumpe (P) zum Befördern des Regenwassers (RW) vom Wassertank (WT) zum Wärmetauscher (RAD) abhängig von der gemessenen Temperatur.

5. Kühleinrichtung nach einem der vorhergehenden Ansprüche,
**dadurch gekennzeichnet,**
**dass** ein Verschmutzungssensor (VS) zum Ermitteln einer Verschmutzung des Wärmetauschers (RAD) vorgesehen ist, und
**dass** die Zulaufsteuerung (CTL) zum Steuern der Regenwasserzuführung abhängig von der ermittelten Verschmutzung eingerichtet ist.

6. Kühleinrichtung nach einem der vorhergehenden Ansprüche,
**gekennzeichnet durch**
eine an die Wasserleitung (WL) angeschlossene Sprühanlage und/oder Sprinkleranlage (SP) zum Versprühen, Spritzen oder Träufeln des zugeführten Regenwassers (RW) auf den Wärmetauscher (RAD).

7. Kühleinrichtung nach einem der vorhergehenden Ansprüche,
**gekennzeichnet durch**
eine an die Wasserleitung (WL) angeschlossene Benetzungsanlage (SP) zum Aufbringen des zugeführten Regenwassers (RW) als Wasserfilm auf den Wärmetauscher (RAD).

8. Kühleinrichtung nach einem der vorhergehenden Ansprüche,
**gekennzeichnet durch**
eine über dem Wärmetauscher (RAD) und/oder in unterschiedlichen Höhen neben dem Wärmetauscher (RAD) angeordnete Sprühanlage, Sprinkleranlage und/oder Benetzungsanlage (SP).

9. Offshore-Plattform (OP) mit einer energietechnischen Offshore-Anlage (OT) sowie mit einer Kühleinrichtung (KE) nach einem der vorhergehenden Ansprüche zum Kühlen der energietechnischen Offshore-Anlage (OT), wobei eine Regenwasser-Drainage (RD) der Offshore-Plattform (OP) in den Wassertank (WT) mündet.

## Claims

1. Cooling device (KE) for cooling an offshore energy system (OT), comprising
a water tank (WT),
a collecting device (REC), leading into the water tank (WT), for collecting rainwater (RW) in the water tank (WT),
a heat exchanger (RAD) that can be thermally coupled to the offshore energy system (OT),
a water line (WL), leading from the water tank (WT) to the heat exchanger (RAD), for supplying collected rainwater (RW) to the heat exchanger (RAD) for cooling the heat exchanger (RAD), and an inflow controller (CTL) for the water line (WL) for controlling the rainwater supply depending on a temperature measured by a temperature sensor (TS1,...,TS5).

2. Cooling device according to Claim 1, **characterized in that** the offshore energy system (OT) comprises an offshore transformer and/or an offshore power converter.

3. Cooling device according to one of the preceding claims,
**characterized**
**in that** the temperature sensor (TS1,...,TS5) is designed to measure a temperature of the offshore energy system (OT), a temperature of the heat exchanger (RAD), an air temperature and/or a water temperature.

4. Cooling device according to one of the preceding claims,
**characterized by**
a pump (P), arranged on the water line (WL) and controlled by the inflow controller (CTL), for transporting the rainwater (RW) from the water tank (WT) to the heat exchanger (RAD) depending on the temperature measured.

5. Cooling device according to one of the preceding claims,
**characterized**
**in that** a contamination sensor (VS) is provided for determining contamination of the heat exchanger (RAD), and
**in that** the inflow controller (CTL) is designed for controlling the rainwater supply depending on the contamination determined.

6. Cooling device according to one of the preceding claims,
**characterized by**
a spray system and/or sprinkler system (SP), connected to the water line (WL), for spraying, sprinkling or drizzling the supplied rainwater (RW) onto the heat exchanger (RAD).

7. Cooling device according to one of the preceding claims,
**characterized by**
a wetting system (SP), connected to the water line (WL), for applying the supplied rainwater (RW) to the heat exchanger (RAD) as a film of water.

8. Cooling device according to one of the preceding claims,
**characterized by**
a spray system, sprinkler system and/or wetting system (SP), arranged over the heat exchanger (RAD) and/or at different heights alongside the heat exchanger (RAD).

9. Offshore platform (OP) with an offshore energy system (OT) and with a cooling device (KE) according to one of the preceding claims for cooling the offshore energy system (OT), a rainwater drainage (RD) of the offshore platform (OP) entering the water tank (WT).

## Revendications

1. Dispositif de refroidissement (KE) servant au refroidissement d'une installation technique de production d'énergie en mer (OT), comprenant
- un réservoir d'eau (WT),
- un dispositif récepteur (REC) débouchant dans le réservoir d'eau (WT) et servant à collecter de l'eau de pluie (RW) dans le réservoir d'eau (WT),
- un échangeur de chaleur (RAD) pouvant être couplé thermiquement à l'installation technique de production d'énergie en mer (OT),
- une conduite d'eau (W) menant du réservoir d'eau (WT) à l'échangeur de chaleur (RAD) et servant à amener l'eau de pluie collectée (RW) jusqu'à l'échangeur de chaleur (RAD) pour le refroidissement de l'échangeur de chaleur (RAD), et
- une commande d'alimentation (CTL) pour la conduite d'eau (WL) servant à commander l'amenée d'eau de pluie en fonction d'une température mesurée par un capteur de température (TS1,...,TS5).

2. Dispositif de refroidissement selon la revendication 1, **caractérisé**
**en ce que** l'installation technique de production d'énergie en mer (OT) comprend un transformateur en mer et/ou un convertisseur en mer.

3. Dispositif de refroidissement selon l'une des revendications précédentes, **caractérisé**
**en ce que** le capteur de température (TS1,...,TS5) est conçu pour mesurer une température de l'installation technique de production d'énergie en mer (OT), une température de l'échangeur de chaleur (RAD), une température de l'air et/ou une température de l'eau.

4. Dispositif de refroidissement selon l'une des revendications précédentes, **caractérisé par**
une pompe (P) située sur la conduite d'eau (WL) et commandée par la commande d'alimentation (CTL), servant à transporter l'eau de pluie (RW) du réservoir d'eau (WT) jusqu'à l'échangeur de chaleur (RAD) en fonction de la température mesurée.

5. Dispositif de refroidissement selon l'une des revendications précédentes, **caractérisé**
**en ce qu'**un capteur d'encrassement (VS) servant à déterminer un encrassement de l'échangeur de chaleur (RAD) est prévu, et en ce que la commande d'alimentation (CTL) est conçue pour commander l'amenée d'eau de pluie en fonction de l'encrassement déterminé.

6. Dispositif de refroidissement selon l'une des revendications précédentes, **caractérisé par**
une installation de pulvérisation et/ou installation d'aspersion (SP) raccordée à la conduite d'eau (WL) et servant à la pulvérisation, l'aspersion ou l'arrosage au goutte-à-goutte de l'échangeur de chaleur (RAD) avec l'eau de pluie (RW) amenée.

7. Dispositif de refroidissement selon l'une des revendications précédentes, **caractérisé par**
une installation de mouillage (SP) raccordée à la conduite d'eau (WL) et servant à appliquer l'eau de pluie amenée (RW) sous forme de pellicule d'eau sur l'échangeur de chaleur (RAD).

8. Dispositif de refroidissement selon l'une des revendications précédentes, **caractérisé par**
une installation de pulvérisation, installation d'aspersion et/ou installation de mouillage (SP) située au-dessus de l'échangeur de chaleur (RAD) et/ou à différentes hauteurs près de l'échangeur de chaleur (RAD).

9. Plate-forme en mer (OP) comprenant une installation technique de production d'énergie en mer (OT) et comprenant un dispositif de refroidissement (KE) selon l'une des revendications précédentes pour le refroidissement de l'installation technique de production d'énergie en mer (OT), une canalisation de drainage d'eau de pluie (RD) de la plate-forme en mer (OP) débouchant dans le réservoir d'eau (WT).
